Europäisches Patentamt

European Patent Office

Office européen des brevets

(11) Publication number: **0 183 376**
**B1**

# EUROPEAN PATENT SPECIFICATION

(45) Date of publication of patent specification: **12.07.89**

(21) Application number: **85307557.0**

(22) Date of filing: **18.10.85**

(51) Int. Cl.⁴: **C 10 G 45/64,** C 10 G 73/02,
C 01 B 33/28, B 01 J 29/28

(54) Method for dewaxing hydrocarbon oil.

(30) Priority: **18.10.84 JP 218847/84**

(43) Date of publication of application:
**04.06.86 Bulletin 86/23**

(45) Publication of the grant of the patent:
**12.07.89 Bulletin 89/28**

(84) Designated Contracting States:
**DE FR GB IT**

(56) References cited:
**FR-A-1 502 289**
**FR-A-2 421 846**
**GB-A-1 161 974**
**GB-A-2 034 352**
**US-A-4 021 331**
**US-A-4 148 713**
**US-A-4 448 675**

The file contains technical information
submitted after the application was filed and
not included in this specification

(73) Proprietor: **NIPPON OIL CO. LTD.**
**3-12, Nishi Shinbashi 1-chome**
**Minato-ku Tokyo (JP)**

(72) Inventor: **Ushio, Masaru**
**1915-135, Kamariyacho Kanazawa-ku**
**Yokohama-shi, Kanagawa-ken (JP)**
Inventor: **Okazaki, Hajime**
**203, Kizukiohmachi Nakahara-ku, Kawasaki-shi**
**Kanagawa-ken (JP)**

(74) Representative: **Brown, John David et al**
**FORRESTER & BOEHMERT Widenmayerstrasse**
**4/I**
**D-8000 München 22 (DE)**

Courier Press, Leamington Spa, England.

## Description

This invention relates to a method for catalytically dewaxing hydrocarbon oil, and more particularly to a method for producing hydrocarbon oil of good flowability by thermally contacting such hydrocarbon oil represented by petroluem fraction with zeolite system catalyst.

Recently, the demand for heavy fuel oils B and C has been reduced, and the demand for the so-called middle distillate fraction including kerosine, gas oil, and heavy fuel oil A has increased. In order to meet this demand, a method has been devised wherein the end point in a distillation test of gas oil fractions has been set at a high level to enhance the yield of gas oil. In this case, however, the pour point of the gas oil rises with the increase in the end point. Consequently, it becomes necessary to provide a process in which the pour point of such a gas oil fraction with a high pour point is lowered, to enable the use of the fraction as a compounding ingredient for gas oil or fuel oil.

There is also an increasing demand for a lubricating oil fraction having a low pour point and low viscosity for use as a base oil for insulating oil refrigerating oil, hydraulic oil and the like.

These oils have heretofore been obtained by fractional distillation or purification or naphthenic crude oil of low wax content, but the remarkable demand for the former oils continues to expand so that it is necessary to search for other sources of the raw material.

Lubricating oil fractions having the above mentioned property may be obtained from abundant paraffinic crude oil in accordance with solvent dewaxing methods, but such methods involve a problem from the viewpoint of cost so that a more inexpensive method is desired.

In view of the above, various catalytic dewaxing methods have been proposed as those for lowering pour point hydrocarbon fraction.

FR—A—2421846 discloses an aluminosilicate catalyst which can be used in dewaxing processes and which comprises a silica source, an alumina source, an alkali source, water, an organic compound. The catalyst is prepared by reacting the gelled mixture under thermal conditions. FR—A—2421846 also discusses the incorporation of a hydrogenating component and a halogen promoter to enhance the stability, selectivity and activity of the aluminosilicate catalyst.

US—A—4448675 discloses a crystalline aluminosilicate comprising a silica source, an alumina source, an alkali source, water and an organic compound, which crystalline aluminosilicate is prepared under the thermal conditions.

GB—A—1161974 discloses an aluminosilicate comprising a silica source, an alumina source, an alkali source, water and an organic compound which aluminosilicate is prepared under thermal conditions.

There are also disclosed Japanese Patent Publication No. 31856/1970 wherein mordenite is used as the catalyst, Patent Publication Nos. 30463/1970 and 7764/1972 in which type A zeolite is utilized as their catalysts, Patent Publication No. 32723/1972 wherein erionite is used as the catalyst, and Patent Publication No. 34444/1974 in which ZSM-5 zeolite is used as the catalyst, respectively. However, these prior art methods involve such disadvantages as insufficient recovery, short catalyst life and the like. Thus, development of such catalysts having high selectivity and long life is desired.

The present invention has been made to eliminate the disadvantages of the conventional methods as described above, and an object of the invention is to produce dewaxed oil in a stable fashion and in high yield for a long period of time by utilizing such a catalyst, the excessive cracking activity of which has been suppressed, and has high selectivity and long life.

The present invention relates to a method of dewaxing hydrocarbon oil, which method comprises bringing into contact hydrocarbon oil and a catalyst consisting of crystalline aluminosilicate preparable by maintaining a gelled reaction mixture composed of a silica source, an alumina source, an alkali source, water and an organic compound under thermal conditions, with the respective molar ratios being in the ranges, as follows:

$$SiO_2/Al_2O_3 = \text{from 10 to 300}$$
$$H_2O/SiO_2 = \text{from 5 to 100}$$
$$OH^-/SiO_2 = \text{from 0.01 to 1.0}$$
$$R/Al_2O_3 \geqq 0.05$$

wherein R is the organic compound, characterised in that the catalyst further comprises a fluorine compound.

The present invention further relates to a crystalline aluminosilicate preparable by maintaining a gelled reaction mixture composed of a silica source, an alumina source, an alkali source, water and an organic compound under thermal conditions, with the respective molar ratios being in the ranges, as follows:

$$SiO_2/Al_2O_3 = \text{from 10 to 300}$$
$$H_2O/SiO_2 = \text{from 5 to 100}$$
$$OH^-/SiO_2 = \text{from 0.01 to 1.0}$$
$$R/Al_2O_3 \geqq 0.05$$

wherein R is the organic compound, characterised in that the mixture further comprises a fluorine compound.

2

The present invention still further relates to a method of preparing a crystalline aluminosilicate, which method comprises maintaining a gelled reaction mixture composed of a silica source, an alumina source, an alkali source, water and an organic compound under hydrothermal synthetic conditions, with the respective molar ratios being in the ranges, as follows:

$$SiO_2/Al_2O_3 = \text{from 10 to 300}$$
$$H_2O/SiO_2 = \text{from 5 to 100}$$
$$OH^-/SiO_2 = \text{from 0.01 to 1.0}$$
$$R/Al_2O_3 \geqq 0.05$$

wherein R is the organic compound, characterised in that the mixture further comprises a fluorine compound.

An example of the silica source used in the present invention includes silica gel, silica aerogel, silica hydrogel, silicic acid, silicate ester, sodium silicate and the like.

An example of the alumina source includes sodium aluminate, aluminum sulfate, aluminum nitrate, alumina sol, alumina gel, activated alumina, α-alumina, γ-alumina and the like.

As the alkali source, caustic soda, caustic potash, caustic lithium and the like may be used, and preferable is caustic soda.

The alkali source is preferably added such that $OH^-$ ion concentration exists in said gelled reaction mixture with said ratio of composition.

The organic compound may be one having one or more hydrophylic functional groups in its molecule. Examples of such organic compound include alcohols, organic amines, quaternary alkyl ammonium salts, carboxylic acids, ketones, amides, imides, esters, thiols and the like. These organic compounds may contain two or more of different functional groups.

I) An example of the alcohols includes monoalcohols such as methanol, ethanol, t-butanol and the like; diols such as ethylene glycol and the like; and triols such as glycerin and the like.

II) An example of the organic amines includes primary amines such as n-propylamine, monoethanol amine and the like; secondary amines such as dipropylamine, diethanolamine and the like, and tertiary amines such as tripropylamine, triethanolamine and the like.

III) An example of the quaternary alkylammonium salts includes tetrapropylammonium bromide, tetramethylammonium bromide, tetraethylammonium bromide tetrapropylammonium chloride, tetrabutylammonium bromide, tetrabutylammonium chloride and the like.

IV) An example of the carboxylic acids includes tartaric acid, succinic acid, citric acid, toluic acid, salicylic acid and the like.

V) An example of ketones includes methyl ethyl ketone, diethyl ketone, diisobutyl ketone and the like.

VI) An example of the amides includes acetamide and the like.

VII) An example of the imides includes acetyl imide, succinic imide and the like.

VIII) An example of the esters includes ethyl acetate, isoamyl acetate, ethyl acrylate and the like.

IX) An example of the thiols includes ethyl mercaptan, methane thiol, 1-propane thiol, 1-butane thiol and the like.

The water-soluble reaction mixture prepared from the silica source, the alumina source, the alkali source, water and the organic compound in said molar ratio is placed in a closed vessel, for example, stainless steel autoclave to crystallize it. The thermal conditions for crystallization is such that a reaction temperature of 50—300°C, and preferably 100—200°C, and a reaction time is three hours to one month, and preferably five hours to five days. It is desirable to maintain the reaction mixture in a homogeneous state by agitating continuously or periodically the same during the crystallization. The crystallized material produced in accordance with thermal reaction is taken out from the closed vessel, washed with water, filtered, and dried. Typical X-ray diffraction patterns of the crystalline aluminosilicate thus synthesized are specified in the following Table 1.

# EP 0 183 376 B1

TABLE 1:
X-ray diffraction of zeolite powder

| 2θ (degree) | Lattice plane distance d(A) | Relative strength |
|---|---|---|
| 7.76 | 11.36 | strong |
| 8.67 | 10.20 | moderately strong |
| 8.93 | 9.90 | |
| 9.68 | 9.14 | very weak |
| 11.73 | 7.54 | weak |
| 12.34 | 7.17 | weak |
| 13.03 | 6.79 | very weak |
| 14.61 | 6.06 | weak |
| 15.36 | 5.77 | weak |
| 15.73 | 5.63 | weak |
| 16.35 | 5.42 | very weak |
| 17.08 | 5.19 | very weak |
| 17.56 | 5.05 | weak |
| 19.03 | 4.65 | weak |
| 20.19 | 4.40 | weak |
| 20.68 | 4.30 | weak |
| 21.59 | 4.12 | very weak |
| 22.01 | 4.04 | very weak |
| 22.96 | 3.87 | |
| 23.14 | 3.84 | very strong |
| 23.60 | 3.77 | |
| 23.77 | 3.74 | very strong |
| 24.58 | 3.62 | strong |
| 25.44 | 3.50 | weak |
| 25.71 | 3.46 | weak |
| 26.75 | 3.33 | weak |
| 27.26 | 3.27 | very weak |
| 29.11 | 3.07 | weak |
| 29.76 | 3.00 | moderate |

The crystalline aluminosilicate thus synthesized does not exhibit any solid acidity without modification. The dewaxing reaction according to the present invention is acid catalyst reaction. Thus, it is required that ratio of the alkali in said crystalline aluminosilicate has been reduced by subjecting the same to dealkalization with the use of acid, ammonium salt or the like in order to utilize said crystalline aluminosilicate as the catalyst in the method according to the present invention.

With respect to degree of dealkalization, it is preferable to remove 50 mol% or more of alkali metal or alkaline earth metal from said crystalline aluminosilicate, and particularly preferable is to remove 90 mol% or more of such metal. In this case, examples of dealkalizing agent include mineral acids such as hydrochloric acid, sulfuric acid, nitric acid, phosphoric acid and the like; water-soluble organic acids such as formic acid, acetic acid, malic acid and the like; and ammonium salts such as ammonium chloride, ammonium nitrate and the like, and preferably used is hydrochloric acid, nitric acid, ammonium chloride, and ammonium sulfate. These acids or salts may be used alone or in admixture.

These acids or salts are used in the form of aqueous solution. The acid concentration in this case depends upon processing conditions, but preferably is 1—6N, and when used ammonium salt, a concentration is 1—30%, and preferably 5—15%. The processing temperature may be room temperature, but heating ranging from 80 to 100°C is preferable to shorten such processing time. Because processing time depends upon temperature, it cannot be absolutely said, but generally a processing time of 5 hours to three days is preferable.

Examples of the fluoride used in the present invention include aluminium fluoride, ammonium fluoride zinc fluoride, cadmium fluoride, manganese fluoride, chromium fluoride, tin fluoride, copper fluoride, silver fluoride and the like.

Among others, particularly preferable are aluminium fluoride and ammonium fluoride. They may be used singly or in combination with one or more of said fluoride compounds.

Preferable examples of aluminium fluoride include aluminium trifluoride hydrate prepared in accordance with processes described, for example, in E. Baud, "Ann. Chim. Phrs.", (8) 1, 60 (1904); A. Mazzuchelli, "Atti Accad Lincei.", (5) *16i*, 775 (1907); W. F. Fhret and F. T. Frere, "J. Am. Chem. Soc.", *67* 64 (1945) and the like, and basic aluminum fluoride prepared according to processes disclosed in J. M. Cowley

4

and T. R. Scott, "J. Am. Chem. Soc.", 70, 105 (1948); as well as R. L. Johnson and B. Siegel, "Nature" 210, 1256 (1966), respectively.

Particularly α-AlF$_3$ · 3H$_2$O, β-AlF$_3$ · 3H$_2$O, and such aluminum fluorides obtained by calcining these compounds at a temperature of 700°C or less, and preferably 200—500°C are preferably utilized. Furthermore, such aluminium fluorides which are similarly effective to those mentioned above are prepared by either passing excess anhydrous hydrogen fluoride through a reaction tube charged with alumina, aluminium hydroxide, or the mixture thereof at a temperature of 200—500°C, or passing excess anhydrous hydrogen fluoride through a reaction tube charged with aluminium chloride at a temperature of 20—400°C. In the case where these aluminium fluorides are prepared as a component of the catalyst in the method according to the present invention, it is not necessarily required that they are purely prepared to use them, but those obtained as the mixture thereof are sufficient for such purpose.

In general, commercially available fluoride ammonium (NH$_4$F) is sufficient for use in the method of the present invention. In place of ammonium fluoride, acid ammonium fluoride may be utilized.

The binary system catalyst according to the present invention may be prepared by admixing such dealkalized crystalline aluminosilicate which has been subjected to acid treatment, then washed sufficiently with water, and dried usually at a temperature of 50—200°C for 0.5—8 hours with a fluoride compound, thereafter molding the admixture into a material having a suitable shape such as powder, granule (1—5 mmφ) or the like in accordance with, for example, compression molding, extrusion molding or the like, and calcining the material at a temperature of 100—700°C, and preferably 300—600°C for 0.5 hour or more, and preferably 1.0—24 hours.

In order to elevate strength of the molded material, a natural clay such as kaolin and the like, or a synthetic binder consisting of silica, alumina and the like may be added.

Generally, said calcination is carried out in the atmosphere, but it is, of course, also possible to effect the calcination in inert gas such as nitrogen gas, carbon dioxide gas and the like, or hydrogen gas.

In the present invention, one, two or more of metallic components having hydrogenation capability may also be supported on said catalyst as the tertiary component. By the addition of such a metallic component, the catalyst can further be improved in activity, selectively, and life thereof.

An example of said metallic component having weak hydrogenation capability includes platinum, palladium, ruthenium, rhenium, nickel, rhodium, osmium, iridium, silver, copper, zinc, vanadium, chromium, iron, cobalt, cadmium, tin, manganese, tungsten, molybdenum, boron, titanium, and gallium.

Said metallic component may be supported on the catalyst consisting of said crystalline aluminosilicate and said fluoride compound in accordance with a conventional method such as ion exchange method, dipping method or the like. After having been supported on the catalyst in accordance with any of the above methods, the supported catalyst is dried at a temperature of 50—250°C for 0.5 hour or more, preferably 1—48 hours, and followed by calcination at a temperature of 300—700°C, preferably 400—600°C for 0.5 hour or more, preferably 1—24 hours, whereby a fresh catalyst involving the tertiary component can be prepared.

Such supporting procedure may be effective before said dealkalized crystalline aluminosilicate is admixed with fluoride compound. For instance, as the extreme case said metal components can be added to the raw materials in the hydrothermal synthesis of the crystalline aluminosilicate. In a binary system catalyst consisting of crystalline aluminosilicate and fluoride compound, the percentage composition of the catalyst according to the present invention is such that the dealkalized crystalline aluminosilicate is generally 20—99 wt.%, preferably 40—90 wt.%, and the fluoride compound is 1—80 wt.%, preferably 5—60 wt.%. Furthermore, in a ternary system catalyst consisting of crystalline aluminosilicate, a fluoride compound and a metal having hydrogenation capability, the percentage composition of the catalyst of the present invention is such that the dealkalized crystalline aluminosilicate is usually 20—99 wt.%, preferably 40—90 wt.%, the fluoride compound is 1—80 wt.%, preferably 10—60 wt.%, and a content of the metallic component having hydrogenation capability is 0.05—30 wt.%, preferably 1—10 wt.%.

For this crystalline aluminosilicate, one having SiO$_2$/Al$_2$O$_3$ (molar ratio) of 10—300, preferably from 10 or more to less than 100 is utilized. This is because such a catalyst consisting of the crystalline aluminosilicate having the above stated range and a fluoride compound exhibits the longest life and high yield of dewaxed oil in dewaxing reaction of hydrocarbon fraction.

The catalyst prepared in accordance with the manner described above is used under the following reaction conditions. Namely, reaction pressure is 0.98—98.0×10$^5$ Pa (1—100 kg/cm$^2$), preferably 19.6—49.1×10$^5$ Pa (20—50 kg/cm$^2$), liquid hourly space velocity (LHSV) which means contact time in the reaction is 0.1—10 hr$^{-1}$, preferably 0.5—5.0 hr$^{-1}$. In the present invention, dewaxing reaction of hydrocarbon oil is preferably carried out in the presence of hydrogen gas. Hydrogen has principally a function of decreasing amount of carbon deposition. A ratio of hydrogen to hydrocarbon is 100—1500 Nm$^3$/m$^3$, and preferably 200—800 Nm$^3$/m$^3$.

The hydrocarbon oil used in the method of the present invention means various hydrocarbon oils containing such wax components ranging from a comparatively light fraction to a high-boiling fraction. An example of the hydrocarbon oils includes crude oil, FCC cycle oil, FCC tower residue, gas oil, desulfurized gas oil, vacuum gas oil, desulfurized vacuum gas oil, vacuum residue, deasphalted residue, tar sand oil, oil sand oil or the like.

The dewaxing reaction in the present invention may be carried out in a fixed bed, a suspended bed or the other types of bed which have heretofore been publicly known, but a fixed bed reaction is optimum in view of the ease of the operation.

Since the catalyst used in the present invention is slow in coke deposition rate and high in selective cracking activity, dewaxed oil can be produced in soluble fashion at high yield for a long period of time, when using such a catalyst.

Examples

The method of the present invention will be described in detail hereinbelow in conjunction with specific examples.

Standard reaction conditions for dewaxing were as follows.

| | |
|---|---|
| Reaction pressure $\times 10^5$ Pa [(kg/cm$^2$G)] | 40.3 (40) |
| LHSV (hr$^{-1}$) | 2.0 |
| Hydrogen flow rate litres/litre oil (SCF/bbl) | 356 (2,000) |

Reaction temperature was chosen such that the pour point of 165°C of distilled oil was reduced by 15°C. In this connection, it is required to gradually raise the reaction temperature in order to keep such pour point constant, because the catalyst deteriorates with the lapse of reaction time, even if the same catalyst is used. A raw material oil, such as desulfurized reduced pressure gas oil having the following property was employed.

| | | |
|---|---|---|
| Distillation, °C | 10% | 342 |
| | 50% | 370 |
| | 90% | 411 |
| Sulfur content, wt.% | | 0.41 |
| Pour point, °C | | 18 |

Comparative Example 1, Example 1

Solution A was prepared from 6.48 g of aluminum sulfate $Al_2(SO_4)_3 \cdot 18H_2O$, 18.6 g of concentrated sulfuric acid, 22.6 g of (n-$C_3H_7$)$_4$NBr, and 180 cc of water, whilst solution B was prepared from 207 g of water glass ($SiO_2$/NaOH/$H_2O$=29/9/62 in weight ratio) and 133 cc of water. Furthermore solution C was prepared by dissolving 78.8 g of sodium chloride into 313 cc of water. Both the solutions A and B were added little by little to solution C while sufficiently agitating them in such a manner that pH of the resulting mixed solution is within a range of 9.5—10.0 by adjusting a dropping amount, whereby an aqueous gelled mixture was obtained.

A stainless steel autoclave having 1 l internal volume was charged with the gelled mixture and sealed, thereafter heated and agitated at 150°C for 16 hours.

A white powdery reaction product was filtered off and washed, thereafter dried at 120°C for 5 hours, and further the reaction product thus treated was calcined at 500°C for 5 hours. X-ray diffraction diagram of the product after calcination had the same peak patterns as those of Table 1. As a result of analysis of composition of the product, $SiO_2$/$Al_2O_3$ (molar ratio) was 80.

The zeolite powder thus obtained was warmed to 90°C with 1N aqueous ammonium chloride solution, and the solution was subjected to ion exchange for 1 hour, filtered and washed, thereafter these operations were repeated three times. Then, the zeolite product was sufficiently washed with distilled water, and dried overnight at 120°C. The zeolite thus dealkalized was compression molded into pellets of 3×4 mmφ, and these pellets were calcined at 500°C for 8 hours to obtain catalyst A. On one hand, catalyst B was prepared in accordance with such manner that 10 wt.% of aluminium trifluoride were added to and admixed with the same dealkalized zeolite with that described above, the admixture was compression molded into pellets of 3×4 mmφ, and these pellets were calcined at 500°C for 8 hours.

Dewaxing reaction of desulfurized vacuum gas oil was effected under standard reaction conditions by the use of catalysts A and B.

The reaction temperature for the 165°C+ fraction having pour point of −15°C, on the 10th day after starting the reaction, as well as yield of the 165°C+ fraction, and the rate of reaction temperature increase required for maintaining said pour point were as follows.

| | Comparative Example 1 | Example 1 |
|---|---|---|
| Catalyst | A | B |
| Reaction temperature (°C) | 350 | 330 |
| Rate of reaction temperature (°C/day) | 5.0 | 3.0 |
| Yield of 165°C or more fraction (wt.%) | 81.1 | 85.4 |

The composite catalyst B comprising the zeolite and aluminium trifluoride exhibits a lower rate of reaction temperature increase for compensating the decrease in activity due to deposition of coke-like material and higher yield of 165°C+ dewaxed oil than those of the case where catalyst A is used. Thus, it is found that catalyst B has a long life and is excellent in selectivity with respect to dewaxed oil.

Comparative Example 2, Example 2

9.22 g of solid caustic soda and 19.0 g of ethanol were dissolved into 344.2 g of water, and then added 17.5 g of aqueous sodium aluminate solution to obtain a homogeneous solution. To this solution were gradually added 227.6 g of water glass ($SiO_2/NaOH/H_2O=29/9/62$ in weight ratio) while agitating them to obtain an aqueous gelled mixture. A stainless steel autoclave having 1 l internal volume was charged with the gelled mixture and sealed, thereafter heated and agitated at 160°C for 72 hours.

A white powdery reaction product was filtered off and washed, thereafter dried at 120°C for 5 hours, and further the reaction product thus treated was calcined at 500°C for 5 hours. The X-ray diffraction diagram of the product after calcination had the same peak patterns as those of Table 1.

As a result of analysis of composition of the product, $SiO_2/Al_2O_3$ (molar ratio) was 28.

The zeolite powder thus obtained was subjected to ion exchange by using 1N hydrochloric acid at ordinary temperature for 1 hour, filtered and washed, thereafter these operations were repeated three times. Then, the zeolite product was sufficiently washed with distilled water, and dried overnight at 120°C. The zeolite thus dealkalized was compression molded into pellets of 3×4 mmφ, and these pellets were calcined at 500°C for 8 hours to obtain catalyst C. On one hand, catalyst D was prepared in accordance with such manner that 10 wt.% of ammonium fluoride were added to and admixed with the same dealkalized zeolite with that described above, the admixture was compression molded into pellets of 3×4 mmφ, and these pellets were calcined at 500°C for 8 hours.

Dewaxing reaction of desulfurized vacuum gas oil was effected under standard reaction conditions by the use of catalysts C and D.

The reaction temperature for the fraction having pour point of 165°C+ and which on the 10th day after starting the reaction reduces by 15°C, as well as yield of the 165°C+ fraction, and the rate of reaction temperature rise required for maintaining said pour point were as follows.

|  | Comparative Example 2 | Example 2 |
|---|---|---|
| Catalyst | C | D |
| Reaction temperature (°C) | 355 | 335 |
| Rate of reaction temperature (°C/day) | 5.5 | 3.5 |
| Yield of 165°C or more fraction (wt.%) | 80.5 | 84.3 |

The composite catalyst D comprising the zeolite and ammonium fluoride exhibits a lower rate of temperature rise and higher yield of 165°C+ dewaxed oil than those of the case where catalyst C is used. Thus, it is found that catalyst D has a long life and is excellent in selectivity with respect to dewaxed oil.

Example 3

Desulfurized vacuum gas oil was dewaxed while flowing nitrogen in place of hydrogen in Example 1.

The reaction temperature for the fraction having a pour point of 165°C+ and which on the 10th day after starting the reaction, reduces by 15°C, as well as yield of the 165°C+ fraction, and the rate of reaction temperature rise required for maintaining said pour point were as follows.

|  | Example 3 | Example 1 (reference) |
|---|---|---|
| Catalyst | B | B |
| Reaction temperature (°C) | 340 | 330 |
| Rate of reaction temperature (°C/day) | 4.0 | 3.0 |
| Yield of 165°C of more fraction (wt.%) | 86.1 | 85.4 |
| Gas | Nitrogen | Hydrogen |

It is found that when hydrogen gas is replaced by nitrogen gas, the catalyst life is shortened, but the yield of the dewaxed oil becomes somewhat better.

Example 4

Catalyst B of Example 1 was dipped into aqueous silver nitrate solution so as to contain 5 wt.% of metallic silver, thereafter the catalyst B thus dipped was dried at 120°C for 8 hours, and calcined at 500°C for 8 hours to obtain catalyst E.

The dewaxing reaction of desulfurized vacuum gas oil was effected under standard reaction conditions by the use of catalyst E.

The reaction temperature for the fraction having a pour point of 165°C+ and which on the 10th day after starting the reaction reduces by 15°C, as well as yield of 165°C+ fraction, and the rate of reaction temperature rise required for maintaining said pour point were as follows.

| | Example 4 | Example 1 (reference) |
|---|---|---|
| Catalyst | E | B |
| Reaction temperature (°C) | 325 | 330 |
| Rate of reaction temperature (°C/day) | 2.5 | 3.0 |
| Yield of 165°C or more fraction (wt.%) | 82.7 | 85.4 |

When silver having hydrogenation capability is supported on the catalyst, the catalyst life is increased, but the yield of the dewaxed oil decreases.

**Claims**

1. A method of dewaxing hydrocarbon oil, which method comprises bringing into contact hydrocarbon oil and a catalyst consisting of crystalline aluminosilicate preparable by maintaining a gelled reaction mixture composed of a silica source, an alumina source, an alkali source, water and an organic compound under thermal conditions, with the respective molar ratios being in the ranges, as follows:

$SiO_2/Al_2O_3$=from 10 to 300
$H_2O/SiO_2$=from 5 to 100
$OH^-/SiO_2$=from 0.01 to 1.0
$R/Al_2O_3 \geqq 0.05$

wherein R is the organic compound, characterised in that the catalyst further comprises a fluorine compound.

2. A method according to Claim 1, wherein the hydrocarbon oil is brought into contact with the catalyst in the presence of hydrogen.

3. A method according to Claim 1 or 2, wherein the fluroine compound is aluminium fluoride, ammonium fluoride, zinc fluoride, cadmium fluoride, tin fluoride, copper fluoride, or silver fluoride.

4. A method according to Claim 1, 2 or 3, wherein a metal having hydrogenation capability is supported on the catalyst as a tertiary component.

5. A method according to any one of the preceding claims, wherein the organic compound has one or more hydrophilic functional groups in the molecule.

6. A method according to any one of the preceding claims, wherein the crystalline aluminosilicate has $SiO_2/Al_2O_3$ (molar ratio) in the range of from 10 to less than 100.

7. A method according to any one of the preceding claims, wherein the gelled reaction mixture is preparable by mixing from 20 to 99% by weight of the crystalline aluminosilicate with from 1 to 80% by weight of the fluorine compound.

8. A method according to any one of the preceding claims wherein the catalyst is preparable by moulding the gelled reaction mixture and calcining the moulded mixture at from 100° to 700° for 30 minutes or more.

9. A method according to any one of preceding claims further comprising bringing the hydrocarbon oil into contact with the catalyst at a pressure of 1 to 100 kg 1 cm$^2$ at a liquid hourly space velocity of 0.1 to 10 hr$^{-1}$.

10. A crystalline alumnosilicate preparable by maintaining a gelled reaction mixture composed of a silica source, an alumina source, an alkali source, water and an organic compound under thermal conditions, with the respective molar ratios being in the ranges, as follows:

$SiO_2/Al_2O_3$=from 10 to 300
$H_2O/SiO_2$=from 5 to 100
$OH^-/SiO_2$=from 0.01 to 1.0
$R/Al_2O_3 \geqq 0.05$

wherein R is the organic compound, characterised in that the mixture further comprises a fluorine compound.

11. A method of preparing a crystalline aluminosilicate, which method comprises maintaining a gelled reaction mixture composed of a silica source, an alumina source, an alkali source, water and an organic compound under thermal conditions, with the respective molar ratios being in the ranges, as follows:

SiO$_2$/Al$_2$O$_3$=from 10 to 300
H$_2$O/SiO$_2$=from 5 to 100
OH$^-$/SiO$_2$=from 0.01 to 1.0
R/Al$_2$O$_3$≧0.05

wherein R is the organic compound, characterised in that the mixture further comprises a fluorine compound.

**Patentansprüche**

1. Verfahren zum Entparaffinieren von Kohlenwasserstofföl, wobei das Verfahren das In-Kontakt-Bringen von Kohlenwasserstofföl und einem Katalysator umfaßt, der aus kristallinem Alumosilika besteht, das dadurch herstellbar ist, daß ein erstarrtes Reaktionsgemisch, das aus einer Siliziumoxidquelle, einer Aluminiumoxidquelle, einer Alkaliquelle, Wasser und einer organischen Verbindung zusammengesetzt ist, unter thermischen Bedingungen gehalten wird, mit den entsprechenden molaren Verhältnissen, die in den Bereichen liegen, wie folgt:

SiO$_2$/Al$_2$O$_3$=von 10 bis 300
H$_2$O/SiO$_2$=von 5 bis 100
OH$^-$/SiO$_2$=von 0,01 bis 1,0
R/Al$_2$O$_3$≧0,05,

wobei R die organische Verbindung ist, dadurch gekennzeichnet, daß der Katalysator weiterhin eine Fluorverbindung umfaßt.

2. Verfahren nach Anspruch 1, dadurch gekennzeichnet, daß das Kohlenwasserstofföl mit dem Katalysator in Gegenwart von Wasserstoff in Kontakt gebracht wird.

3. Verfahren nach Anspruch 1 oder 2, dadurch gekennzeichnet, daß die Fluorverbindung Aluminiumfluorid, Ammoniumfluorid, Zinkfluorid, Cadmiumfluorid, Zinnfluorid, Kupferfluorid oder Silberfluorid ist.

4. Verfahren nach Anspruch 1, 2 oder 3, dadurch gekennzeichnet, daß ein Metall mit Hydrierungsfähigkeit als tertiäre Komponente auf den Katalysator aufgebracht wird.

5. Verfahren nach einem der vorangehenden Ansprüche, dadurch gekennzeichnet, daß die organische Verbindung eine oder mehrere hydrophile funktionnelle Gruppen im Molekül besitzt.

6. Verfahren nach einem der vorangehenden Ansprüche, dadurch gekennzeichnet, daß das kristalline Alumonisilikat SiO$_2$/Al$_2$O$_3$ (Molverhältnis) im Bereich von 10 bis weniger als 100 aufweist.

7. Verfahren nach einem der vorangehenden Ansprüche, dadurch gekennzeichnet, daß das erstarrte Reaktionsgemisch dadurch herstellbar ist, daß 20 bis 99 Gew.-% des kristallinen Aluminosilikats mit 1 bis 80 Gew.-% der Fluorverbindung vermischt werden.

8. Verfahren nach einem der vorangehenden Ansprüche, dadurch gekennzeichnet, daß der Katalysator dadurch herstellbar ist, daß das erstarrte Reaktionsgemisch geformt und das geformte Gemisch bei 100°C bis 700°C 30 min oder länger kalziniert wird.

9. Verfahren nach einem der vorangehenden Ansprüche, weiter dadurch gekennzeichnet, daß es das In-Kontakt-Bringen des Kohlenwasserstoff öls mit dem Katalysator bei einem Druck von 1 bis 100 kg/cm$^2$ bei einer stundenbezogenen Flüssigkeitsgeschwindigkeit (LHSV) von 0,1 bis 10 hr$^{-1}$ umfaßt.

10. Kristallines Alumosilikat, das dadurch herstellbar ist, daß ein erstarrtes Reaktionsgemisch, welches aus einer Siliziumoxidquelle, einer Aluminiumoxidquelle, einer Alkaliquelle, Wasser und einer organischen Verbindung zusammengesetzt ist, unter thermischen Bedingungen gehalten wird, mit den entsprechenden Molverhältnissen, die in den Bereichen liegen, wie folgt:

SiO$_2$/Al$_2$O$_3$=von 10 bis 300
H$_2$O/SiO$_2$=von 5 bis 100
OH$^-$/SiO$_2$=von 0,01 bis 1,0
R/Al$_2$O$_3$≧0,05,

wobei R die organische Verbindung ist, dadurch gekennzeichnet, daß das Gemisch weiterhin eine Fluorverbindung umfaßt.

11. Verfahren zum Herstellen eines kristallinen Alumosilikats, welches das Halten eines erstarrten Reaktionsgemischs, das aus einer Siliziumoxidquelle, einer Aluminiumoxidquelle, einer Alkali quelle, Wasser und einer organischen Verbindung zusammengesetzt ist, unter thermischen Bedingungen umfaßt, mit den entsprechenden Molverhältnissen, die in den Bereichen liegen, wie folgt:

SiO$_2$/Al$_2$O$_3$=von 10 bis 300
H$_2$O/SiO$_2$=von 5 bis 100
OH$^-$/SiO$_2$=von 0,01 bis 1,0
R/Al$_2$O$_3$≧0,05,

# EP 0 183 376 B1

wobei R die organische Verbindung ist, dadurch gekennzeichnet, daß das Gemisch weiterhin eine Fluorverbindung umfaßt.

## Revendications

1. Un procédé de déparaffinage d'huiles d'hydrocarbures, selon lequel on met en contact une huile d'hydrocarbures et un catalyseur consistant en un aluminosilicate cristallin préparable en maintenant un mélange réactionnel gélifié composé d'une source de silice, d'une source d'alumine, d'une source de métal alcalin, d'eau et d'un composé organique dans des conditions thermiques, les rapports molaires respectifs étant compris dans les intervalles suivants:

$SiO_2/Al_2O_3$=de 10 à 300
$H_2O/SiO_2$=de 5 à 100
$OH^-/SiO_2$=de 0,01 à 1,0
$R/Al_2O_3 \geqq 0,05$

où R est le composé organique, caractérisé en ce que le catalyseur comprend aussi un composé du fluor.

2. Un procédé selon la revendication 1, dans lequel l'huile d'hydrocarbures est mise en contact avec le catalyseur en présence d'hydrogène.

3. Un procédé selon la revendication 1 ou 2, dans lequel le composé du fluor est du fluorure d'aluminium, du fluorure d'ammonium, du fluorure de zinc, du fluorure de cadmium, du fluorure d'étain, du fluorure de cuivre ou du fluorure d'argent.

4. Un procédé selon la revendication 1, 2 ou 3, dans lequel un métal ayant une capacité d'hydrogénation est déposé sur le catalyseur comme constituant tertiaire.

5. Un procédé selon l'une quelconque des revendications précédentes, dans lequel le composé organique a un ou plusieurs groupes fonctionnels hydrophiles dans la molécule.

6. Un procédé selon l'une quelconque des revendications précédentes, dans lequel l'aluminosilicate cristallin a un rapport (molaire) $SiO_2/Al_2O_3$ compris entre 10 et moins de 100.

7. Un procédé selon l'une quelconque des revendications précédentes, dans lequel le mélange réactionnel gélifié est préparable en mélangeant de 20 à 99% en poids de l'aluminosilicate cristallin avec 1 à 80% en poids du composé du fluor.

8. Un procédé selon l'une quelconque des revendications précédentes, dans lequel le catalyseur est préparable en moulant le mélange réactionnel gélifiée et en calcinant le mélange moulé à des températures de 100°C à 700C pendant 30 minutes ou plus.

9. Un procédé selon l'une quelconque des revendications précédentes, dans lequel on met l'huile d'hydrocarbures en contact avec le catalyseur à une pression de 1 à 100 kg/cm² à une vitesse spatiale horaire liquide de 0,1 à 10 $h^{-1}$.

10. Un aluminosilicate cristallin preparable en maintenant un melange réactionnel gélifié composé d'une source de silice, d'une source d'alumine, d'une source de métal alcalin, d'eau et d'un composé organique dans des conditions thermiques, les rapports molaires respectifs étant compris dans les intervalles suivants:

$SiO_2/Al_2O_3$=de 10 à 300
$H_2O/SiO_2$=de 5 à 100
$OH^-/SiO_2$=de 0,01 à 1,0
$R/Al_2O_3 \geqq 0,05$

où R est le composé organique, caractérisé en ce que le mélange comprend aussi un composé du fluor.

11. Un procédé de préparation d'un aluminosilicate cristallin, selon lequel on maintient un mélange réactionnel gélifié composé d'une source de silice, d'une source d'alumine, d'une source de métal alcalin, d'eau et d'un composé organique dans des conditions thermiques, les rapports molaires respectifs étant compris dans les intervalles suivants:

$SiO_2/Al_2O_3$=de 10 à 300
$H_2O/SiO_2$=de 5 à 100
$OH^-/SiO_2$=de 0,01 à 1,0
$R/Al_2O_3 \geqq 0,05$

où R est le composé organique, caractérisé en ce que le mélange comprend aussi un composé du fluor.